(19) **Europäisches Patentamt**
**European Patent Office**
**Office européen des brevets**

(11) **EP 4 648 022 A1**

(12) **EUROPEAN PATENT APPLICATION**

(43) Date of publication:
**12.11.2025 Bulletin 2025/46**

(51) International Patent Classification (IPC):
*G06V 10/75* (2022.01)   *G06T 7/33* (2017.01)
*G06V 10/762* (2022.01)   *G06V 10/82* (2022.01)
*G06V 20/64* (2022.01)

(21) Application number: 24175130.4

(22) Date of filing: **10.05.2024**

(52) Cooperative Patent Classification (CPC):
**G06V 20/64; G06T 7/33; G06V 10/754;
G06V 10/7625; G06V 10/7635; G06V 10/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft
80333 München (DE)**

(72) Inventors:
• **Misik, Adam
  80797 München (DE)**
• **Brock, Heike
  80799 München (DE)**

(74) Representative: **Siemens Patent Attorneys
Postfach 22 16 34
80506 München (DE)**

(54) **METHOD FOR ESTIMATING A 9 DEGREES OF FREEDOM (DOF) TRANSFORMATION FOR REGISTERING A SOURCE POINT CLOUD TO A TARGET POINT CLOUD, METHOD FOR CONTROLLING A DEVICE, CONTROL UNIT, COMPUTER PROGRAM PRODUCT AND COMPUTER-READABLE STORAGE MEDIUM**

(57)    The invention relates to a method for determining a transformation for registering a target point cloud to a source point cloud wherein for each shifted point cloud a respective equivariant node feature set is generated for respective graph hierarchy levels m of a hierarchical graph comprising M graph hierarchy levels, by an equivariant feature extraction and invariant node pooling procedure, wherein the hierarchical graph is representing the respective point cloud; a hierarchical global equivariant feature set of the respective graph hierarchy level m of the respective graph is generated by a global pooling procedure depending on the equivariant node feature set of the respective graph hierarchy level; a further global equivariant feature set of the respective graph is generated by a hierarchical aggregation procedure depending on the respective hierarchical global equivariant feature sets of the graphs; the transformation is determined depending on the global equivariant feature sets.

## FIG 1

EP 4 648 022 A1

**Description**

The invention is concerned with a method for estimating a 9DoF transformation for registering a source point cloud to a target point cloud, a method for controlling a device, a control unit, a computer program product and a computer-readable storage medium.

Point cloud registration plays a central role in robotics by facilitating accurate perception, mapping, and localization for autonomous systems. Methods for point cloud registration have been used in robotic applications such as Simultaneous Localization and Mapping (SLAM), camera localization, or object pose estimation. Conventional point cloud registration methods aim to find six DoF transformation that aligns a source point cloud and a target point cloud. The transformation commonly consists of a 3DoF rotation and a 3DoF translation. However, several tasks related to the robotics domain deal with non-uniformly scaled source and target point clouds. These include category-level object pose estimation problems, scan-to-CAD indoor reconstruction problems, loop closure in object SLAM problems, and cross-sensor point cloud registration. To achieve an accurate registration for such cases, additionally 3DoF scaling must be estimated. This extends the search space to 9DoF for estimating the transformation between source point clouds and target point clouds.

Point cloud registration research can be categorized into two main approaches: local and global methods. Local methods are efficient when provided with an initial transformation, while global methods excel in scenarios with high outlier presence. Among the local methods, ICP is a prominent method (S. T. S. H. S. D. B. Arun, "Least-square fitting of two 3-D point sets, "IEEE Pattern Analysis and Machine Intelligence, vol. 9, 1987). ICP iteratively improves the registration by minimizing the distance between corresponding points in the source and target point clouds.

In the group of global methods, RANSAC has been deployed in combination for feature matching schemes tackling point cloud registration (H. Lei, G. Jiang, and L. Quan, "Fast descriptors and correspondence propagation for robust global point cloud registration," IEEE Trans-actions on Image Processing, vol. 26, no. 8, pp. 3614-3623, 2017). Due to its outlier rejection mechanism, RANSAC is a robust algorithm that produces accurate registration results even in the presence of high noise.

A large body of related work introduces learning-based methods for the point cloud registration task. IDAM proposes an iterative distance-aware similarity matrix convolution module to match points based on joint information of geometric features and an Euclidean offset (J. Li, C. Zhang, Z. Xu, H. Zhou, and C. Zhang, "Iterative distance-aware similarity matrix convolution with mutual-supervised point elimination for efficient point cloud registration," in European Conference on Computer Vision (ECCV). Springer, 2020, pp. 378-394).

As a global learning-based registration method, DeepGMR finds point-to-component correspondences with a PointNet backbone and fits Gaussian Mixture Models (GMM) to the correspondences to obtain the transformation by GMM parameter matching (W. Yuan, B. Eckart, K. Kim, V. Jampani, D. Fox, and J. Kautz,"Deepgmr: Learning latent gaussian mixture models for registration,"in European Conference on Computer Vision (ECCV). Springer, 2020, pp. 733-750).

DeepUME builds upon the Universal Manifold Embedding and proposes a deep neural network leveraging the embedding for registration (N. Lang and J. M. Francos, "Deepume: Learning the universal manifold embedding for robust point cloud registration," in British Machine Vision Conference (BMVC), 2021).

Recently, RIENet proposed a reliable inlier determinion method for unsupervised point cloud registration, utilizing neighborhood consensus to distinguish effective inliers by capturing discriminative geometric differences between the source and pseudo target neighborhoods (Y. Shen, L. Hui, H. Jiang, J. Xie, and J. Yang, "Reliable inlier evaluation for unsupervised point cloud registration," in Proceedings of the AAAI Conference on Artificial Intelligence, vol. 36, no. 2, 2022, pp. 2198-2206).

Vector Neurons (VN) (C. Deng, O. Litany, Y. Duan, A. Poulenard, A. Tagliasacchi, and L. J. Guibas, "Vector neurons: A general framework for so (3)-equivariant networks," in Proceedings of the IEEE/CVF International Conference on Computer Vision (ICCV), 2021, pp. 12 200-12 209) is a popular framework for designing equivariant networks. VN offers a toolkit for designing equivariant versions of architectures known in point cloud analysis, such as PointNet (C. R. Qi, H. Su, K. Mo, and L. J. Guibas, "Pointnet: Deep learning on point sets for 3d classification and segmentation," in Proceedings of the IEEE Conference on Computer Vision and Pattern Recognition (CVPR), 2017, pp. 652-660) and DGCNN (Y. Wang, Y. Sun, Z. Liu, S. E. Sarma, M. M. Bronstein, and J. M. Solomon, "Dynamic graph cnn for learning on point clouds," ACM Transactions on Graphics, vol. 38, no. 5, pp. 1-12, 2019).

Recently, learning-based equivariant methods based on the VNframework have been applied to point cloud registration. Zhu et al. (M. Zhu, M. Ghaffari, and H. Peng, "Correspondence-free point cloud registration with so (3)-equivariant implicit shape representations," in Conference on Robot Learning (CoRL), 2022, pp. 1412-1422) propose an SO(3)- equivariant implicit learning strategy to achieve correspondence-free 3DoF point cloud registration from VN features. Lin et al. (C.-W. Lin, T.-I. Chen, H.-Y. Lee, W.-C. Chen, and W. H. Hsu, "Coarse-to-fine point cloud registration with se (3)-equivariant representations," in 2023 IEEE International Conference on Robotics and Automation (ICRA), 2023, pp. 2833-2840) follow up on this strategy and propose an SE(3)-equivariant globallocal model for 6DoF point cloud registration.

While we similarly leverage VN features, we extend point cloud registration to 9DoF. Moreover, the implicit learning proposed in both approaches introduces additional computational complexity, which decreases its applicability in robotics. In contrast, we propose an explicit learning strategy to address this potential issue.

It is an objective of the present invention to provide a point cloud registration for providing a transformation comprising a 3DoF rotation component, a 3DoF translation component and a 3DoF scaling component.

This objective is achieved by the respective subject matter of the independent claims. Further implementations and preferred embodiments are subject matter of the dependent claims.

A first aspect of the present invention is related to a method for determining a 9DoF transformation for registering a source point cloud to a target point cloud by a control device.

This invention addresses the 9DoF point cloud registration problem by proposing a hierarchical equivariant graph neural network (HEGN). HEGN predicts a 9DoF transformation that accurately aligns source and target point clouds.

In contrast to the discussed methods, the proposed method HEGN leverages equivariance to rotation, translation, and scaling, which allows estimation of a 9DoF transform directly from feature space.

In the method, the source point cloud and the target point cloud are received by the control device.

In the method, a centroid of the respective point cloud is determined. In other words, the method comprises a determination of the centroid of the source point cloud and a determination of the centroid of the target point cloud.

In the method, the respective point cloud is shifted depending on the respective centroid. In other words, the method comprises a generation of a shifted source point cloud, that is shifted by the source centroid. The method further comprises a generation of a shifted target point cloud, that is shifted by the target centroid. The shift of the respective point clouds by the centroids allows an evaluation of rotation components and scaling components of the transformation without an influence of the translation component of the transformation.

In the method, the for each shifted point cloud a respective equivariant node feature set is generated for respective graph hierarchy levels m of a hierarchical graph comprising M graph hierarchy levels, by an equivariant feature extraction and invariant node pooling procedure, wherein the hierarchical graph is representing the respective point cloud.

In other words, for each of the point clouds, a respective hierarchical graph is generated, that represents the respective point cloud. The hierarchical graph comprises a number of M graph hierarchy levels m. For each of the graph hierarchy levels of the respective graph, the respective equivariant node feature set is evaluated. The evaluation of the respective equivariant node feature sets of the hierarchies is performed by the equivariant feature extraction and invariant node pooling procedure.

In the method, a hierarchical global equivariant feature set of the respective graph hierarchy level m of the respective graph is generated by a global pooling procedure depending on the equivariant node feature set of the respective graph hierarchy level. In other words, for each graph hierarchy level m of the graph, the respective equivariant node feature set is evaluated. Therefore a number of M equivariant node feature sets is provided for the respective graph. To allow a global analysis of the respective graph hierarchy level, the equivariant node feature sets of the respective graph hierarchy levels are used to generate the global equivariant feature sets of the respective graph hierarchy levels. In this step a number of M hierarchical global equivariant feature sets are generated.

In the method, a further global equivariant feature set of the respective graph is generated by a hierarchical aggregation procedure depending on the respective hierarchical global equivariant feature sets of the graphs. In other words, in this step, the number of M hierarchical global equivariant feature sets of the respective graph are used to generate the global equivariant feature set of the respective graph.

In the method, a 3DoF rotation component of the transformation is generated by a singular value decomposition procedure depending on the global equivariant feature set of the graphs.

In other words, the transformation comprises the rotation component. The rotation component of the transformation is generated by a singular value decomposition that is performed on the global equivariant feature set of the graph representing the shifted source point cloud and on the graph representing the shifted target point cloud.

In the method, a 3DoF translation component of the transformation is generated by a translation procedure depending on the rotation component and the centroids of the graphs. In other words, the transformation comprises the translation component. The translation component is generated based on the centroid of the source point cloud, the centroid of the target point cloud and the rotation component of the transformation.

In the method, a 3DoF scaling component of the transformation is generated by a scaling procedure depending on vector norms of the global equivariant feature sets of the graphs. In other words, the transformation comprises the scaling component. The scaling component is generated based on the vector norms of the global equivariant feature sets of the graphs.

According to a further embodiment of the invention, the method comprises the following steps performed for each graph hierarchy level. The respective equivariant node feature set of the respective hierarchy level is generated by an equivariant node feature extraction procedure as a function of an initial equivariant node feature set of the respective hierarchy. In other words, for each of the graph hierarchy levels the respective initial equivariant node feature set of the respective hierarchy is provided to the equivariant node feature extraction procedure. The equivariant node feature extraction procedure determines the equivariant node feature set of the respective hierarchy based on the initial equivariant node feature set.

A respective initial equivariant node feature set of a following hierarchy level is generated by an invariant node pooling procedure as a function of the respective equivariant node feature set of the respective hierarchy. In other words, the equivariant node feature set of the respective hierarchy level is used as an input for the invariant node pooling procedure to determine the initial equivariant node feature set of the subsequent hierarchy level. The invariant node pooling procedure determines a pooled equivariant node feature set of the hierarchy level based on the equivariant node feature set of the hierarchy level. The pooled equivariant node feature set comprises the equivariant node features of a predefined number K of the nodes. Therefore the pooled equivariant node feature set comprises a same number of a smaller number of equivariant node features than the equivariant node feature set. Therefore the determination of the equivariant node feature set of the subsequent hierarchy level may require less resources than the determination of the equivariant node feature set of the current hierarchy level.

According to a further embodiment of the invention, the method comprises the following steps performed for each graph hierarchy level.

For each graph hierarchy level a neighbourhood node feature set $f$ of the equivariant node feature set $f$ is generated by a k-nearest neighbour procedure depending on the initial equivariant node feature set. In other words, for each node of the graph a respective neighbourhood node feature is evaluated by a k-nearest neighbour procedure, configured to determine a number of k nodes being the nearest neighbours of the respective node. The k nodes being the nearest neigbours give a k-neighbourhood $N_i$ of the respective node $n_i$. The neighbourhood node features of the nodes of the graph give the neighbourhood node feature set of the equivalent node feature set of the graph.

For each graph hierarchy level a local node feature set $\check{f}$ of the equivariant node feature set is generated by a local context procedure depending on the neighbourhood node feature set $f$ of the equivariant node feature set $f$. In other words, for each node of the graph a respective local node feature is evaluated by a local context extraction procedure. In the local context extraction procedure the local node feature of the node is evaluated on the node feature of the node and the node features of the nodes of the k-neighbourhood $N_i$ of the respective node $n_i$. The local node features of the nodes of the graph give the local node feature set of the equivalent node feature set of the graph.

For each graph hierarchy level a cross node feature set $\overset{\cdots}{f}$ of the equivariant node feature set $f$ is generated by a cross context extraction procedure depending on the local node feature set $\check{f}$ of the equivariant node feature sets of the graphs. In other words, for each node of the graph a respective cross context node feature is evaluated by a cross context extraction procedure.

The cross context node feature is evaluated on the equivariant node features of the node in the graph and at least some equivariant node features of the node in the other of the graphs. The cross node features of the nodes of the graph give the cross node feature set of the equivalent node feature set of the graph.

For each graph hierarchy level a global node feature set $\widetilde{\widetilde{f}}$ of the equivariant node feature set $f$ is generated by a global context procedure depending on the cross context node features $\overset{\cdots}{f}$ of the equivariant node feature set of the graph. In other words, for each node of the graph a respective global context node feature is evaluated by a global context extraction procedure. The global context node feature of the node depends on the cross context node feature $\overset{\cdots}{f}$ of the respective node and the cross node feature set of the graph. The global node features of the nodes of the graph give the global node feature set of the equivalent node feature set of the graph.

According to a further embodiment of the invention, the method comprises the following steps performed for each graph hierarchy level.

For each graph hierarchy level the equivariant node feature set of each of the graphs is mapped to a respective invariant node feature set $\phi$ by an invariant mapping procedure. In other words, the equivariant node feature sets are in an equivariant representation. The equivariant node feature sets are mapped to invariant node feature sets in an invariant representation.

For each graph hierarchy level a node-specific invariant importance score for each of the nodes of the graphs is generated by a scoring procedure depending on the invariant node feature sets of both of the graphs. In other words, for each node of the respective graph the respective invariant importance score is determined. The determination is performed as a function of the invariant node feature set of the respective graph and the invariant node feature set of the other graph.

For each graph hierarchy level the pooled equivariant node feature set is generated by a ranking procedure depending on the equivariant node feature set and the node-specific invariant importance scores for each of the nodes. In other words, the node-specific invariant importance scores evaluated for each of the nodes is used to rank the nodes according to their importance. To determine the nodes comprised in the pooled equivariant node feature set, the K most important nodes of the graph are identified and their respective equivariant node features are added to the pooled equivariant node feature set.

According to a further embodiment of the invention, the local context extraction procedure for the graph of point cloud X is given by:

$$\ddot{f}_X^i = \frac{1}{|N_i|} \sum_{(i,j) \in N_i} VN - MLP\left((\dot{f}_X^j - \dot{f}_X^i) \oplus \dot{f}_X^i\right)$$

wherein VN-MLP is a combination of a VN-Linear and VN-LeakyReLU and $(\dot{f}_X^j - \dot{f}_X^i) \oplus \dot{f}_X^i$ is a concatenation of the node features $\dot{f}_X^i$ of node $n_i$ and the node features $\dot{f}_X^j$ of the nodes $n_j$ of the k-nearest neighbourhood $N_i$ of the node $n_i$. In other words, the local node feature of the respective node is generated by the provided formula. The local context extraction procedure for the graph of point cloud Y is performed as:

$$\ddot{f}_Y^i = \frac{1}{|N_i|} \sum_{(i,j) \in N_i} VN - MLP\left((\dot{f}_Y^j - \dot{f}_Y^i) \oplus \dot{f}_Y^i\right)$$

According to a further embodiment of the invention, the cross context extraction procedure is given for the graph of point cloud X is given by:

$$\ddot{f}_X^i = \ddot{f}_X^i + \sum_{(i,) \in N_i} a_X^j V_Y^j$$

wherein the cross context node feature of the respective node of the graph is calculated depending on a cross-attention score $a_X^j$ of the respective node $n_i$ that is given by:

$$a_X^j = softmax\left(\frac{Q_X^i K_Y^{j,T}}{\sqrt{3C}}\right)$$

wherein a respective query $Q_X^i$ of the respective node is given by:

$$Q_X^i = ChNorm\left(VN - MLP(\ddot{f}_X^i)\right)$$

wherein ChNorm is a vector channel normalization that excludes a scale factor. $K_Y^j$ and $V_Y^j$ depend on the equivariant node features $\ddot{f}_Y^j$ of the nodes $n_j$ in the k-nearest neighborhood $N_i$ of the respective node $n_i$ in the other of the graphs Y and are given by:

$$K_Y^j = ChNorm\left(VN - MLP\left((\ddot{f}_Y^j - \ddot{f}_Y^i) \oplus \ddot{f}_Y^i\right)\right)$$

$$V_Y^j = VN - MLP\left((\ddot{f}_Y^j - \ddot{f}_Y^i) \oplus \ddot{f}_Y^i\right)$$

The cross context extraction procedure for the graph of point cloud Y is given by:

$$\ddot{\tilde{f}}_Y^i = \ddot{f}_Y^i + \sum_{(i,j)\in N_i} a_Y^j V_X^j$$

wherein the cross context node feature of the respective node of the graph is calculated depending on a cross-attention score $a_Y^j$ of the respective node $n_i$ that is given by:

$$a_Y^j = softmax\left(\frac{Q_Y^i K_X^{j,T}}{\sqrt{3C}}\right)$$

wherein a respective query $Q_Y^i$ of the respective node is given by:

$$Q_Y^i = ChNorm\left(VN - MLP(\ddot{f}_Y^i)\right)$$

wherein ChNorm is a vector channel normalization that excludes a scale factor. $K_X^j$ and $V_X^j$ depend on the equivariant node features $\ddot{f}_X^j$ of the nodes $n_j$ in the k-nearest neighborhood $N_i$ of the respective node $n_i$ in the other of the graphs X and are given by:

$$K_X^j = ChNorm\left(VN - MLP\left((\ddot{f}_X^j - \ddot{f}_X^i)\oplus\ddot{f}_X^i\right)\right)$$

$$V_X^j = VN - MLP\left((\ddot{f}_X^j - \ddot{f}_X^i)\oplus\ddot{f}_X^i\right)$$

According to a further embodiment of the invention, the global context extraction procedure for the graph of point cloud X is given by:

$$\tilde{\tilde{f}}_X = VN - MLP(\ddot{f}_X\oplus F_X)$$

wherein the equivariant global features $F_X \in R^{C\times 3}$ of the respective graph are an average along a node dimension of the cross context feature set $\ddot{f}_X$.

The global context extraction procedure for the graph of point cloud Y is given by:

$$\tilde{\tilde{f}}_Y = VN - MLP(\ddot{f}_Y\oplus F_Y)$$

wherein the equivariant global features $F_Y \in R^{C\times 3}$ of the respective graph are an average along a node dimension of the cross context feature set $\ddot{f}_Y$.

According to a further embodiment of the invention, the invariant mapping procedure for the graph of point cloud X is given by:

$$\phi_X = \langle \widetilde{\widehat{f}}_X, \frac{\overline{\widetilde{\widehat{f}}_X}}{|\overline{\widetilde{\widehat{f}}_X}|} \rangle$$

Wherein

$$\overline{\widetilde{\widehat{f}}_X}$$

is an average of $\widetilde{\widehat{f}}_x$ along a feature dimension C.

The invariant mapping procedure for the graph of point cloud Y is given by:

$$\phi_Y = \langle \widetilde{\widehat{f}}_Y, \frac{\overline{\widetilde{\widehat{f}}_Y}}{|\overline{\widetilde{\widehat{f}}_Y}|} \rangle$$

According to a further embodiment of the invention, the scoring procedure is given by;

$$S_C = softmax(\phi_X \phi_Y^T)$$

According to a further embodiment of the invention, the ranking procedure is given by:

$$idx = rank(S_C, K)$$

wherein K is a number of nodes of the pooled equivariant node feature set.

A second aspect of the present invention is related to a method for controlling a device. In the method a source point cloud is sensed by a sensor unit of the device. In the method a target point cloud is sensed by the sensor unit of the device. In the method the source point cloud and the target point cloud are transmitted to the control unit of the device. The control unit performs a method of determining a transformation for registering the target point cloud to the source point cloud according to the first aspect of the present invention. The device is controlled by the control unit as a function of the transformation.

A third aspect of the present invention is related to a control unit configured to carry out a method according to the first aspect of the present invention and/or to carry out a method according to the second aspect of the present invention. The control unit may comprise a computing device.

A fourth aspect of the present invention is related to a computer program product comprising program code for performing a method according to the first aspect and/or according to the second aspect. The computer program product may also be regarded to a computer program.

A fifth aspect of the present invention is related to a computer-readable storage medium comprising at least the computer program product according to the fourth aspect.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

Independent of the grammatical term usage, individuals with male, female or other gender identities are included within the term.

In the following, the invention will be explained in detail with reference to specific exemplary implementations and respective schematic drawing. In the drawing, identical or functionally identical elements may be denoted by the same reference signs.

In the figures,

FIG. 1      shows a schematic illustration of a method;

FIG. 2      shows another schematic illustration of a method; and

FIG. 3      shows a schematic illustration of a device.

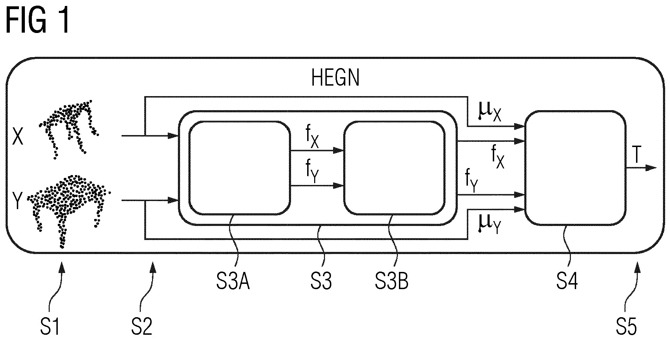

FIG. 1 shows a schematic illustration of a method.

The method may be performed a control unit of a device. The control unit may be configured to receive a source point cloud and a target point cloud from a sensor unit. The point clouds may describe an environment of the device. The control unit may be configured to determine a transformation for registering the target point cloud to the source point cloud. The control unit may be configured to control the device as a function of the transformation.

To address the 9DoF point cloud registration problem, recent progress in equivariant point cloud analysis is used. 9DoF point cloud registration is addressed by aligning equivariant global features. First, the respective centroid may be subtracted from the respective point cloud. The respective centroids may be preserved for the registration step, ensuring translation equivariance through the whole architecture. The overall architecture of the proposed HEGN is displayed in FIG 1.

In a first step S1 the control unit 2 may receive the source point cloud and the target point cloud. The point clouds may comprise points.

In a second step S2, a centroid of the source point cloud and a centroid of the target point cloud may be determined by the control unit. The source point cloud is shifted by the source centroid to obtain a shifted source point cloud. The target point cloud is shifted by the target centroid to obtain a shifted target point cloud.

In a third step S3 the shifted source point cloud and the shifted target point cloud may be analysed in a feature extraction and node pooling procedure comprising an equivariant feature extraction procedure S3A and an invariant node pooling procedure S3B.

In a fourth step S4 the hierarchical equivariant node feature sets evaluated for the graph representing the source point cloud and the equivariant node feature sets evaluated for the graph representing the target point cloud may be provided to a hierarchical 9DoF Registration procedure. The source centroid and the target centroid may also be provided to the hierarchical 9DoF Registration procedure. In the hierarchical 9DoF Registration procedure the Transformation comprising a 3DoF rotation component, a 3DoF translation component and a 3DoF scaling component may be determined.

In a fifth step S5, the evaluated Transformation may be used by the control unit to control the device.

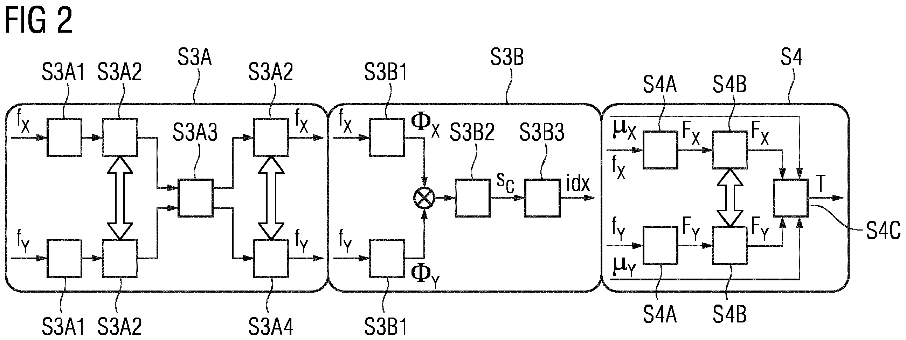

FIG. 2 shows another schematic illustration of the method.

The Equivariant Feature Extraction procedure S3A may comprises the following substeps. The substeps may be performed for each hierarchy level of a hierarchical graph comprising M graph hierarchy levels.

Same local, cross, and global context aggregation substeps with shared layers may be used to derive the equivariant node feature sets of both graphs.

In a first substep S3A1 a K-nearest neighbors search may be performed on the initial equivariant node feature set. In a first of the hierarchy levels, the k-nearest neighbors search may be performed on each point of the respective point cloud. To construct the initial graph for the source point cloud and target point cloud, the k-nearest neighbors search may be performed for each point in the source point cloud and target point cloud. A shared VN-DGCNN layer with mean pooling over the k-neighborhood may be used to map the spatial dimension of the source point cloud and the target point cloud to the feature space. This step may generate the node features $f \in R^{N \times C \times 3}$ where C denotes the feature dimension. Given the characteristics of VN, the extracted node features are equivariant to rotations. Furthermore, scale equivariance is given through the vector nature of the features.

At the other hierarchy levels, the k-nearest neighbors search may be performed on each node of the initial equivariant node feature set of the respective hierarchy level. After the initial graph creation and feature extraction, the graph may be updated dynamically after each feature extraction and node pooling block.

In a next substep S3A2, to aggregate the local context for each node, a VN-DGCNN layer may be used over the feature of the node, and the node features of its k-nearest neighborhood as:

$$\ddot{f}_X^i = \frac{1}{|N_i|} \sum_{(i,j) \in N_i} VN - MLP\left(\left(\dot{f}_X^j - \dot{f}_X^i\right) \oplus \dot{f}_X^i\right)$$

wherein VN-MLP is a combination of a VN-Linear and VN-LeakyReLU and $\left(\dot{f}_X^j - \dot{f}_X^i\right) \oplus \dot{f}_X^i$ is a concatenation of the node features $\dot{f}_X^i$ of node $n_i$ and the node features $\dot{f}_X^j$ of the nodes $n_j$ of the k-nearest neighbourhood $N_i$ of the node $n_i$. In other words, the local node feature of the respective node is generated by the provided formula. The local context extraction procedure for the graph of point cloud Y is performed as:

$$\ddot{f}_Y^i = \frac{1}{|N_i|} \sum_{(i,j) \in N_i} VN - MLP\left(\left(\dot{f}_Y^j - \dot{f}_Y^i\right) \oplus \dot{f}_Y^i\right)$$

In a next substep S3A3, to capture cross contextual information between both graphs, cross attention may be utilized using a VN-Transformer. The feature aggregated with cross-contextual information is obtained as follows:

$$\ddot{f}_X^i = \ddot{f}_X^i + \sum_{(i,) \in N_i} a_X^j V_Y^j$$

wherein the cross context node feature of the respective node of the graph is calculated depending on a cross-attention score $a_X^j$ of the respective node $n_i$ that is given by:

$$a_X^j = softmax\left(\frac{Q_X^i K_Y^{j,T}}{\sqrt{3C}}\right)$$

wherein a respective query $Q_X^i$ of the respective node is given by:

$$Q_X^i = ChNorm\left(VN - MLP(\ddot{f}_X^i)\right)$$

wherein ChNorm is a vector channel normalization that excludes a scale factor. $K_Y^j$ and $V_Y^j$ depend on the equivariant node features $\ddot{f}_Y^j$ of the nodes $n_j$ in the k-nearest neighborhood $N_i$ of the respective node $n_i$ in the other of the graphs Y and are given by:

$$K_Y^j = ChNorm\left(VN - MLP\left(\left(\ddot{f}_Y^j - \ddot{f}_Y^i\right) \oplus \ddot{f}_Y^i\right)\right)$$

$$V_Y^j = VN - MLP\left(\left(\ddot{f}_Y^j - \ddot{f}_Y^i\right)\oplus\ddot{f}_Y^i\right)$$

The cross context extraction procedure for the graph of point cloud Y is given by:

$$\dddot{f}_Y^i = \ddot{f}_Y^i + \sum_{(i,j)\in N_i} a_Y^j V_X^j$$

wherein the cross context node feature of the respective node of the graph is calculated depending on a cross-attention score $a_Y^j$ of the respective node $n_i$ that is given by:

$$a_Y^j = softmax\left(\frac{Q_Y^i K_X^{j,T}}{\sqrt{3C}}\right)$$

wherein a respective query $Q_Y^i$ of the respective node is given by:

$$Q_Y^i = ChNorm\left(VN - MLP(\ddot{f}_Y^i)\right)$$

wherein ChNorm is a vector channel normalization that excludes a scale factor. $K_X^j$ and $V_X^j$ depend on the equivariant node features $\ddot{f}_X^j$ of the nodes $n_j$ in the k-nearest neighborhood $N_i$ of the respective node $n_i$ in the other of the graphs X and are given by:

$$K_X^j = ChNorm\left(VN - MLP\left(\left(\ddot{f}_X^j - \ddot{f}_X^i\right)\oplus\ddot{f}_X^i\right)\right)$$

$$V_X^j = VN - MLP\left(\left(\ddot{f}_X^j - \ddot{f}_X^i\right)\oplus\ddot{f}_X^i\right)$$

Given the excluded scale from the vector channel normalization and rotation invariance from the query and key dot product, the obtained cross-attention score is both rotation- and scale-invariant. This step ensures that the cross-attention stays equivariant with respect to rotation and scale.

To improve the expressiveness of the extracted node features, global context aggregation may be performed S3A4. This type of aggregation may be performed by averaging the features along the node dimension to obtain global features $F_X \in R^{C\times3}$ for the respective graph. The features may be updated through global context aggregation as follows:

$$\dddot{\vec{f}}_X = VN - MLP(\dddot{f}_X \oplus F_X)$$

wherein the equivariant global features $F_X \in R^{C\times3}$ of the respective graph are an average along a node dimension of the cross context feature set $\dddot{f}_X$.

The global context extraction procedure for the graph of point cloud Y is given by:

$$\dddot{\vec{f}}_Y = VN - MLP(\dddot{f}_Y \oplus F_Y)$$

wherein the equivariant global features $F_Y \in R^{C\times3}$ of the respective graph are an average along a node dimension of the cross context feature set $\dddot{f}_Y$.

To increase efficiency, methods relying on graph neural networks propose to use the furthest point sampling to reduce the graph size. However, such a sampling procedure is associated with high computational costs, thus decreasing applicability to time-sensitive robotics applications. Furthermore, contextual information in the graph is not considered. A sampling-free graph pooling mechanism is used that captures contextual information to account for such deficiencies.

In step S3B1 the rotation and scale equivariant node features $\tilde{\tilde{f}}_x \in R^{N \times C \times 3}$ are mapped to their rotation and scale invariant representations $\phi_X \in R^{N \times C}$, where

$$\overline{\tilde{\tilde{f}}}_X$$

is derived by averaging $\tilde{\tilde{f}}_x$ along the feature dimension C.

$$\phi_X = \langle \, \tilde{\tilde{f}}_X \, , \frac{\overline{\tilde{\tilde{f}}}_X}{|\overline{\tilde{\tilde{f}}}_X|} \, \rangle$$

The invariant mapping procedure for the graph of point cloud Y is given by:

$$\phi_Y = \langle \, \tilde{\tilde{f}}_Y \, , \frac{\overline{\tilde{\tilde{f}}}_Y}{|\overline{\tilde{\tilde{f}}}_Y|} \, \rangle$$

An aim of step S3B2 is to derive node-specific importance scores based on invariant node features. To ensure that cross-contextual information is considered in the node importance calculation, $\phi_X$ and $\phi_y$ may be correlated to obtain invariant importance scores $s_c \in R^N$ as:

$$S_C = softmax(\phi_X \phi_Y^T)$$

By deriving importance scores from cross-contextual information, it is ensured that the node pooling chooses nodes based on their shared importance in both point clouds.

Given the rotation and scale invariance of the invariant node features, the learned node importance scores are also invariant, ensuring consistent importance of nodes under arbitrary rotations and scaling.

In step S3B3 $S_C$ may be used to pool the nodes in both graphs in a TopK-ranking to find a set of K node indices idx:

$$idx = rank(s_C, K)$$

idx is used to select the top-ranking nodes and define the pooled graph features of the graph of point cloud X as:

$$\tilde{\tilde{f}}_X^{\ m+1} = \tilde{\tilde{f}}_X^{\ m}(idx)$$

The pooled graph features of the graph of point cloud Y are obtained as:

$$\tilde{\tilde{f}}_Y^{\ m+1} = \tilde{\tilde{f}}_Y^{\ m}(idx)$$

where m denotes the graph hierarchy level. The pooled graph features of both graphs are then used as input for the next block of feature extraction and node pooling.

Hierarchical 9DoF Registration

After M blocks of feature extraction and node pooling S3, M equivariant node features $f_X = \{f_X{}^1 ... f_X{}^M\}$ representing the graph hierarchy of point cloud X, and M equivariant node features $f_Y = \{f_Y{}^1 ... f_Y{}^M\}$ representing the graph hierarchy of point cloud Y are obtained.

In a step S4A a mean pooling along the node dimension of the node features is performed to obtain global equivariant features $F_X = \{F_X{}^1 ... F_X{}^M\}$ for point cloud X, and global equivariant features $F_Y = \{F_Y{}^1 ... F_Y{}^M\}$ for point cloud Y.

In a step S4B, a hierarchical aggregation using a VN-MLP for point cloud X is performed as:

$$F_X = VN - MLP\left(F_X{}^1 ... \oplus F_X{}^M\right)$$

The hierarchical aggregation using a VN-MLP for point cloud Y is performed as:

$$F_Y = VN - MLP\left(F_Y{}^1 ... \oplus F_Y{}^M\right)$$

In a step S4C the transformation may be determined.

A singular value decomposition between $F_X$ and $F_Y$ is performed to find the rotation R component of the transformation that aligns the point clouds without relying on point correspondences.

The preserved centroids of the point clouds X and Y, namely $\mu_x$ and $\mu_Y$, are then used to find translation component t of the transformation as

$$t = \mu_y - R\mu_x$$

To find the scaling component S of the transformation, the scale information that vector norms hold is used to derive the scaling component as:

$$S = \frac{S_Y}{S_X} = \frac{\|F_Y\|}{\|F_X\|}$$

where $S_X$ and $S_Y$ denote the 3DoF scales of X and Y. Given scale equivariance of global feature vectors, the scale of both X and Y can be efficiently extracted.

Loss Function

To train HEGN, a two-part loss term is introduced. The first component is the registration loss $L_R$, which minimizes the mean squared error between the predicted (p) and ground truth (g) 9DoF transformation elements, defined as:

$$L_R = \left\|R_g^T R_p - 1_{3\times3}\right\|_2^2 + \left\|t_g - t_p\right\|_2^2 + \left\|S_g - S_p\right\|_2^2$$

where $1_{3\times3}$ denotes a 3×3 identity matrix. A Chamfer Distance (CD) may be used to measure a dissimilarity between the points of T(X) and Y:

$$L_{CD} = CD((T(X), Y)$$

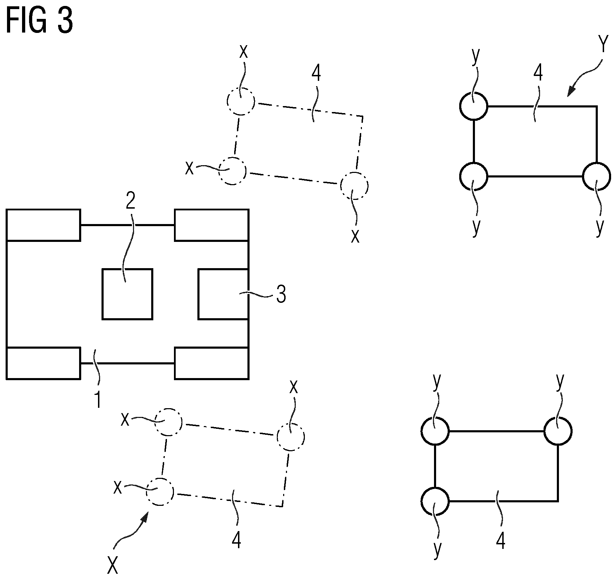

FIG. 3 shows a schematic illustration of a device.

The device may be a robot or a vehicle. The device 1 may comprise a control unit 2 for controlling the device 1. For example, the control unit 2 may be configured to control a movement of the device 1. The device 1 may comprise a sensor unit 3. The sensor unit 3 may comprise a LIDAR and/or a radar module. The sensor unit 3 may be configured to scan an environment of the device 1 at a first time and to generate a source point cloud X comprising source points x. The sensor unit 3 is configured to scan the environment of the device 1 at a second time and to generate a target point cloud Y comprising target points y. The source points x and the target points y may relate to reflections on objects 4 of the environment. The device 1 may have moved between the two times. To determine the movement between the times, the control unit 2 may be configured to perform the method of determining a transformation for registering the source point cloud X to the target point cloud Y. The control unit 2 may be configured to use the transformation as an input to generate a control signal for controlling the device 1 and to provide the control signal to an actuator of the device 1.

**Claims**

1. Method for determining a transformation, for example a 9DoF transformation, for registering a source point cloud to a target point cloud wherein:

   - the source point cloud and the target point cloud are received by a control unit (2);
   - a centroid of the respective point cloud is determined;
   - the respective point cloud is shifted depending on the respective centroid;
   - for each shifted point cloud a respective equivariant node feature set is generated for respective graph hierarchy levels m of a hierarchical graph comprising M graph hierarchy levels, by an equivariant feature extraction and invariant node pooling procedure, wherein the hierarchical graph is representing the respective point cloud;
   - a hierarchical global equivariant feature set of the respective graph hierarchy level m of the respective graph is generated by a global pooling procedure depending on the equivariant node feature set of the respective graph hierarchy level;
   - a further global equivariant feature set of the respective graph is generated by a hierarchical aggregation procedure depending on the respective hierarchical global equivariant feature sets of the graphs;
   - a rotation component or 3DoF rotation component R of the transformation is generated by a singular value decomposition procedure depending on the global equivariant feature set of the graphs;
   - a translation component or 3DoF translation component t of the transformation is generated by a translation procedure depending on the rotation component R and the centroids of the graphs; and
   - a scaling component or 3DoF scaling component S of the transformation is generated by a scaling procedure depending on vector norms of the global equivariant feature sets of the graphs.

2. Method according to claim 1 wherein for each graph hierarchy level

   - the respective equivariant node feature set of the respective hierarchy level is generated by an equivariant node feature extraction procedure as a function of an initial equivariant node feature set of the respective hierarchy;
   - a respective initial equivariant node feature set of a following hierarchy level is generated by an invariant node pooling procedure as a function of the respective equivariant node feature set of the respective hierarchy.

3. Method according to claim 1 or 2, wherein for each graph hierarchy level

   - a neighbourhood node feature set of the equivariant node feature set is generated by a k-nearest neighbour procedure depending on the initial equivariant node feature set;
   - a local node feature set of the equivariant node feature set is generated by a local context extraction procedure depending on the neighbourhood node feature set of the equivariant node feature set;
   - a cross node feature set of the equivariant node feature set is generated by a cross context extraction procedure depending on the local node feature set of the equivariant node feature sets of the graphs;
   - a global node feature set of the equivariant node feature set is generated by a global context extraction procedure depending on the cross node feature set of the equivariant node feature set of the graph;

4. Method according to any one of the preceding claims wherein for each hierarchy of the hierarchical equivariant node feature set:

   - the equivariant node feature set of each of the graphs is mapped to a respective invariant node feature set $\phi$ by an invariant mapping procedure;
   - node-specific invariant importance scores for each of the nodes of the graphs are generated by a scoring procedure depending on the invariant node feature sets $\phi$ of both of the graphs;
   - the pooled equivariant node feature set is generated by a ranking procedure depending on the equivariant node feature set and the node-specific invariant importance scores for each of the nodes.

5. Method according to claim 3, wherein the local context extraction procedure is given by:

$$\ddot{f}_X^i = \frac{1}{|N_i|} \sum_{(i,j)\in N_i} VN - MLP\left(\left(\dot{f}_X^j - \dot{f}_X^i\right) \oplus \dot{f}_X^i\right)$$

wherein VN-MLP is a combination of a VN-Linear and VN-LeakyReLU and $\left(\dot{f}_X^j - \dot{f}_X^i\right) \oplus \dot{f}_X^i$ is a concatenation of the node features $\dot{f}_X^i$ of node $n_i$ and the node features $\dot{f}_X^j$ of the nodes $n_j$ of the k-nearest neighbourhood $N_i$ of the node $n_i$, for example the local node feature of the respective node is generated by the provided formula, the local context extraction procedure for the graph of point cloud Y is performed as:

$$\ddot{f}_Y^i = \frac{1}{|N_i|} \sum_{(i,j)\in N_i} VN - MLP\left(\left(\dot{f}_Y^j - \dot{f}_Y^i\right) \oplus \dot{f}_Y^i\right)$$

6. Method according to claim 3, 4 or 5, wherein the cross context extraction procedure is given by:

$$\dddot{f}_X^i = \ddot{f}_X^i + \sum_{(i,)\in N_i} a_X^j V_Y^j$$

wherein the cross context node feature of the respective node of the graph is calculated depending on a cross-attention score $a_X^j$ of the respective node $n_i$ that is given by:

$$a_X^j = softmax\left(\frac{Q_X^i K_Y^{j,T}}{\sqrt{3C}}\right)$$

wherein a respective query $Q_X^i$ of the respective node is given by:

$$Q_X^i = ChNorm\left(VN - MLP(\ddot{f}_X^i)\right)$$

wherein ChNorm is a vector channel normalization that excludes a scale factor, $K_Y^j$ and $V_Y^j$ depend on the equivariant node features $\ddot{f}_Y^j$ of the nodes $n_j$ in the k-nearest neighborhood $N_i$ of the respective node $n_i$ in the other of the graphs Y and are given by:

$$K_Y^j = ChNorm\left(VN - MLP\left(\left(\ddot{f}_Y^j - \ddot{f}_Y^i\right) \oplus \ddot{f}_Y^i\right)\right)$$

$$V_Y^j = VN - MLP\left(\left(\ddot{f}_Y^j - \ddot{f}_Y^i\right) \oplus \ddot{f}_Y^i\right)$$

the cross context extraction procedure for the graph of point cloud Y is given by:

$$\dddot{f}_Y^i = \ddot{f}_Y^i + \sum_{(i,j)\in N_i} a_Y^j V_X^j$$

wherein the cross context node feature of the respective node of the graph is calculated depending on a cross-attention score $a_Y^j$ of the respective node $n_i$ that is given by:

$$a_Y^j = softmax\left(\frac{Q_Y^i K_X^{j,T}}{\sqrt{3C}}\right)$$

wherein a respective query $Q_Y^i$ of the respective node is given by:

$$Q_Y^i = ChNorm\left(VN - MLP\left(\ddot{f}_Y^i\right)\right)$$

wherein ChNorm is a vector channel normalization that excludes a scale factor. $K_X^j$ and $V_X^j$ depend on the equivariant node features $\ddot{f}_X^j$ of the nodes $n_j$ in the k-nearest neighborhood $N_i$ of the respective node $n_i$ in the other of the graphs X and are given by:

$$K_X^j = ChNorm\left(VN - MLP\left(\left(\ddot{f}_X^j - \ddot{f}_X^i\right)\oplus\ddot{f}_X^i\right)\right)$$

$$V_X^j = VN - MLP\left(\left(\ddot{f}_X^j - \ddot{f}_X^i\right)\oplus\ddot{f}_X^i\right)$$

**7.** Method according to 3, 4, 5 or 6, wherein the global context procedure is given by:

$$\widetilde{f}_X = VN - MLP\left(\ddot{f}_X\oplus F_X\right)$$

wherein the equivariant global features $F_X \in R^{C\times 3}$ of the respective graph are an average along a node dimension of the cross context feature set $\ddot{f}_X$, the global context extraction procedure for the graph of point cloud Y is given by:

$$\widetilde{f}_Y = VN - MLP\left(\ddot{f}_Y\oplus F_Y\right)$$

wherein the equivariant global features $F_Y \in R^{C\times 3}$ of the respective graph are an average along a node dimension of the cross context feature set $\ddot{f}_Y$.

**8.** Method according to claim 4, wherein the invariant mapping procedure is given by:

$$\phi_X = \langle\, \widetilde{f}_X\,, \frac{\overline{\widetilde{f}_X}}{|\overline{\widetilde{f}_X}|}\, \rangle$$

wherein

$$\overline{\tilde{\vec{f}}}_X$$

is an average of $\tilde{\vec{f}}_x$ along a feature dimension C, the invariant mapping procedure for the graph of point cloud Y is given by:

$$\phi_Y = \langle \tilde{\vec{f}}_Y , \frac{\overline{\tilde{\vec{f}}}_Y}{|\overline{\tilde{\vec{f}}}_Y|} \rangle$$

9. Method according to claim 4 or 8, wherein the scoring procedure is given by;

$$S_C = softmax(\phi_X \phi_Y^T)$$

10. Method according to claim 4,8 or 9, wherein the ranking procedure is given by:

$$idx = rank(S_C, K)$$

wherein K is a number of nodes of the pooled equivariant node feature set.

11. Method for controlling a device (1) by a control unit (2), wherein

- a source point cloud is sensed by a sensor unit (3) of the device (1);
- a target point cloud is sensed by a sensor unit (3) of the device (1);
- the source point cloud and the target point cloud are transmitted to the control unit (2) of the device (1);
- a method of determining a transformation for registering the target point cloud to the source point cloud according to any one of the preceding claims is performed by the control unit (2); and
- the device (1) is controlled by the control unit as a function of the Transformation.

12. Control unit (2) configured to carry out a method according to any one of the claims 1 to 10 and/or to carry out a method according to claim 11.

13. Computer program product comprising program code for performing a method according to any one of the claims 1 to 10 and/or for performing a method according to claim 11.

14. Computer-readable storage medium comprising at least the computer program product according to claim 13.

# FIG 1

FIG 2

# FIG 3

Europäisches
Patentamt

European
Patent Office

Office européen
des brevets

# EUROPEAN SEARCH REPORT

**Application Number**

**EP 24 17 5130**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIANG PAN ET AL: "Robust Partial-to-Partial Point Cloud Registration in a Full Range", ARXIV.ORG, CORNELL UNIVERSITY LIBRARY, 201 OLIN LIBRARY CORNELL UNIVERSITY ITHACA, NY 14853, 8 April 2022 (2022-04-08), XP091195836, | 1-3, 11-14 | INV. G06V10/75 G06T7/33 G06V10/762 G06V10/82 G06V20/64 |
| A | * abstract * * Section 3.1; page 4 * * Section 4.1; page 6 - page 7 * * Section 4.2; page 7 * | 4-10 | |
| A | LIN CHENG-WEI ET AL: "Coarse-to-Fine Point Cloud Registration with SE(3)-Equivariant Representations", 2023 IEEE INTERNATIONAL CONFERENCE ON ROBOTICS AND AUTOMATION (ICRA), IEEE, 29 May 2023 (2023-05-29), pages 2833-2840, XP034367781, DOI: 10.1109/ICRA48891.2023.10161141 [retrieved on 2023-07-04] * abstract * * page 2 - page 4 * | 1-14 | |
| A | US 2022/414821 A1 (ZHU MINGHAN [US] ET AL) 29 December 2022 (2022-12-29) * paragraph [0026] - paragraph [0042] * | 1-14 | |

TECHNICAL FIELDS SEARCHED (IPC)

G06V
G06T

-/--

The present search report has been drawn up for all claims

| Place of search | Date of completion of the search | Examiner |
|---|---|---|
| The Hague | 10 October 2024 | Natanni, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                       
& : member of the same patent family, corresponding document

EPO FORM 1503 03.82 (P04C01)

**EUROPEAN SEARCH REPORT**

**Application Number**

EP 24 17 5130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | MISIK ADAM ET AL: "HEGN: Hierarchical Equivariant Graph Neural Network for 9DoF Point Cloud Registration", 2024 IEEE INTERNATIONAL CONFERENCE ON ROBOTICS AND AUTOMATION (ICRA), IEEE, 13 May 2024 (2024-05-13), pages 6981-6988, XP034664356, DOI: 10.1109/ICRA57147.2024.10610562 [retrieved on 2024-08-08] * the whole document * | 1-14 | |

-----

**TECHNICAL FIELDS SEARCHED (IPC)**

The present search report has been drawn up for all claims

| Place of search | Date of completion of the search | Examiner |
|---|---|---|
| The Hague | 10 October 2024 | Natanni, Francesco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  & : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 5130

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2024

| Patent document cited in search report | Publication date | Patent family member(s) | Publication date |
|---|---|---|---|
| US 2022414821 A1 | 29-12-2022 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. T. S. H. S. D. B. ARUN**. Least-square fitting of two 3-D point sets. *IEEE Pattern Analysis and Machine Intelligence*, 1987, vol. 9
- **H. LEI** ; **G. JIANG** ; **L. QUAN**. Fast descriptors and correspondence propagation for robust global point cloud registration. *IEEE Trans-actions on Image Processing*, 2017, vol. 26 (8), 3614-3623
- Iterative distance-aware similarity matrix convolution with mutual-supervised point elimination for efficient point cloud registration. **J. LI** ; **C. ZHANG** ; **Z. XU** ; **H. ZHOU** ; **C. ZHANG**. European Conference on Computer Vision (ECCV).. Springer, 2020, 378-394
- Deepgmr: Learning latent gaussian mixture models for registration. **W. YUAN** ; **B. ECKART** ; **K. KIM** ; **V. JAMPANI** ; **D. FOX** ; **J. KAUTZ**. in European Conference on Computer Vision (ECCV). Springer, 2020, 733-750
- **N. LANG** ; **J. M. FRANCOS**. Deepume: Learning the universal manifold embedding for robust point cloud registration. *British Machine Vision Conference (BMVC)*, 2021
- **Y. SHEN** ; **L. HUI** ; **H. JIANG** ; **J. XIE** ; **J. YANG**. Reliable inlier evaluation for unsupervised point cloud registration. *in Proceedings of the AAAI Conference on Artificial Intelligence*, 2022, vol. 36 (2), 2198-2206
- **C. DENG** ; **O. LITANY** ; **Y. DUAN** ; **A. POULENARD** ; **A. TAGLIASACCHI** ; **L. J. GUIBAS**. Vector neurons: A general framework for so (3)-equivariant networks. *in Proceedings of the IEEE/CVF International Conference on Computer Vision (ICCV)*, 2021, vol. 12, 200-12
- **C. R. QI** ; **H. SU** ; **K. MO** ; **L. J. GUIBAS**. Pointnet: Deep learning on point sets for 3d classification and segmentation. *in Proceedings of the IEEE Conference on Computer Vision and Pattern Recognition (CVPR)*, 2017, 652-660
- **Y. WANG** ; **Y. SUN** ; **Z. LIU** ; **S. E. SARM** ; **M. M. BRONSTEIN** ; **J. M. SOLOMON**. Dynamic graph cnn for learning on point clouds. *ACM Transactions on Graphics*, 2019, vol. 38 (5), 1-12
- **M. ZHU** ; **M. GHAFFARI** ; **H. PENG**. Correspondence-free point cloud registration with so (3)-equivariant implicit shape representations. *in Conference on Robot Learning (CoRL)*, 2022, 1412-1422
- **C.-W. LIN** ; **T.-I. CHEN** ; **H.-Y. LEE** ; **W.-C. CHEN** ; **W. H. HSU**. Coarse-to-fine point cloud registration with se (3)-equivariant representations. *in 2023 IEEE International Conference on Robotics and Automation (ICRA)*, 2023, 2833-2840